# EUROPÄISCHE PATENTSCHRIFT

(11) **EP 2 895 759 B1**
(45) Veröffentlichungstag und Bekanntmachung des Hinweises auf die Patenterteilung: **25.04.2018**
(21) Anmeldenummer: 13759212.7
(22) Anmeldetag: 09.09.2013
(51) Int. Cl.: F16D 55/02

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 13.09.2012 DE 102012108575
(43) Veröffentlichungstag der Anmeldung: 22.07.2015
(73) Patentinhaber: KNORR-BREMSE Systeme für Nutzfahrzeuge GmbH, 80809 München (DE)
(72) Erfinder: ASEN, Alexander, 94428 Eichendorf (DE)
(86) Internationale Anmeldenummer: PCT/EP2013/068552
(87) Internationale Veröffentlichungsnummer: WO 2014/040931

(56) Entgegenhaltungen:
- EP-A1- 1 942 286
- WO-A1-2007/085439
- DE-C1- 19 855 614

## Beschreibung

Die Erfindung betrifft eine Scheibenbremse für ein Nutzfahrzeug gemäß dem Oberbegriff des Anspruchs 1.

Bei einer solchen Scheibenbremse weist der Bremssattel, der eine Bremsscheibe übergreift und in dem zwei, in Funktion an die Bremsscheibe anpressbare Bremsbeläge angeordnet sind, einen Aufnahmeraum auf, in dem eine Zuspanneinrichtung mit Stellspindeln positioniert ist.

Zum Schutz der Funktionsteile ist eine der Bremsscheibe zugewandte Montage- und Funktionsöffnung des Aufnahmeraumes mittels einer Verschlussplatte verschlossen, die von den Stellspindeln durchtreten wird. Im Übrigen dient die Verschlussplatte als Tragteil diverser Anbauteile, wie Faltenbälgen, Dichtungen und dergleichen.

Die Befestigung der Verschlussplatte erfolgt mittels Schrauben, die im Randbereich umfänglich angeordnet und in den Bremssattel eingedreht sind.

Für eine wirkungsvolle Abdichtung der Verschlussplatte gegenüber dem Bremssattel, um das Eindringen von Feuchtigkeit und Schmutz in den Aufnahmeraum zu verhindern, liegt die Verschlussplatte abgedichtet am Bremssattel an.

Hierzu ist eine Dichtschnur vorgesehen, die einerseits umlaufend am Randbereich der Verschlussplatte und andererseits an einer Auflagefläche des Bremssattels anliegt, wobei diese aus einem elastischen Material bestehende Dichtung beim Anschrauben der Verschlussplatte soweit zusammengedrückt wird, dass eine ausreichende Dichtwirkung erreicht wird.

Zur umlaufenden Verschraubung der Verschlussplatte mit dem Bremssattel sind eine entsprechende Anzahl Gewindebohrungen in den Bremssattel einzubringen, was naturgemäß nur mit einem entsprechenden, kostensteigernden Fertigungsaufwand möglich ist.

Aufgrund der Vielzahl der verwendeten Schrauben gestaltet sich überdies die Montage bzw. Demontage der Verschlussplatte, d.h. das Anziehen und Lösen der Schrauben zeitaufwändig und damit ebenfalls relativ teuer.

Den stetigen Forderungen nach einer kostengünstigen Herstellung einerseits und einer kostengünstigen Montage bzw. Demontage andererseits steht die bekannte Konstruktion daher entgegen.

In der DE 198 55 614 C1 ist eine Scheibenbremse offenbart, bei der die Verschlussplatte durch Schrauben am Bremssattel befestigt ist. Dabei ist vorgesehen, dass die Verschlussplatte im Bereich von Öffnungen angeformte und/oder eingesetzte hohlzylindrische Elemente aufweist, die in Bohrungen des Bremssattels eingreifen und die mit durch die Bohrungen geführten Schrauben korrespondieren.

Aus der WO 2007/085439 A1 ist eine Scheibenbremse bekannt, bei der der Verschlussdeckel ausschließlich formschlüssig am Bremssattel gehalten ist. Zum Formschluss sind als Rastzungen ausgebildete Formschlussmittel am Verschlussdeckel vorgesehen, die in Hinterschneidungen des Bremssattels eingreifen, wobei diese Rastzungen elastisch ausgebildet sind, um den Verschlussdeckel praktisch durch Einklipsen mit dem Bremssattel zu verbinden.

Aus der EP 1 942 286 A1 schließlich ist eine Scheibenbremse bekannt, bei der die Sicherung des Verschlussdeckels am Bremssattel durch einen Sicherungsring erfolgt, der auf dem Verschlussdeckel aufliegt und Hinterschneidungen des Bremssattels hintergreift.

Der Erfindung liegt die Aufgabe zugrunde, eine Scheibenbremse der gattungsgemäßen Art so weiterzuentwickeln, dass sie einfacher und kostengünstiger herstell- und montierbar ist.

Diese Aufgabe wird durch eine Scheibenbremse mit den Merkmalen des Anspruchs 1 gelöst.

Durch den teilweisen Formschluss der Verschlussplatte mit dem Bremsbelag kann in diesem Bereich auf die Einbringung von Gewindebohrungen in den Bremssattel verzichtet werden, wodurch sich eine erhebliche Vereinfachung bei der Bearbeitung des Bremssattels ergibt, mit den daraus folgenden Kostenvorteilen.

Da in diesem Bereich auch keine Materialanhäufung für die Einbringung von Gewindebohrungen erforderlich ist, kann prinzipiell die Montageöffnung größer gestaltet werden, was naturgemäß Montagearbeiten erleichtert, mit denen Funktionsteile in den Aufnahmeraum eingebracht oder herausgenommen werden sollen.

Im übrigen Teilbereich sind wie bisher Schrauben vorgesehen, die es ermöglichen, die Verschlussplatte zerstörungsfrei vom Bremssattel zu lösen, so dass beispielsweise nach einer Reparatur von Funktionsteilen, die Verschlussplatte wieder verwendet werden kann, mit Erneuerung der Dichtung.

Nach einer vorteilhaften Weiterbildung ist vorgesehen in den unteren, also zur Achse der Bremsscheibe hin gerichteten Randbereich der Montage- und Funktionsöffnungen im Bremssattel eine Längsnut einzubringen, in die die aus Blech bestehende Verschlussplatte von oben her eingesteckt werden kann, bevor die Verschraubung erfolgt.

Dabei liegt die Verschlussplatte in Endlage plan an der zugeordneten Fläche im Randbereich der Montage- und Funktionsöffnung an, bei ausreichendem Anpressdruck auf die Dichtung zwischen dem Bremssattel und der Verschlussplatte.

Während bevorzugt die am Bremssattel vorgesehene Nut zur Aufnahme eines Kantenbereichs der Verschlussplatte durchgängig ist und zwar im Wesentlichen über die gesamte nahezu gestreckte Länge der Verschlussplatte, besteht durchaus die Möglichkeit, diese Nut im Längenverlauf zu teilen, so dass Nutenabschnitte entstehen, in denen die Verschlussplatte einliegt. Eine solche Reduktion der Nut führt zu einer Verringerung des Bremssattelgewichts und kommt damit einer ständigen Forderung entgegen, insbesondere zu dem Zweck, Kraftstoff einzusparen.

Allerdings muss dabei gewährleistet sein, dass die Verschlussplatte mit ausreichendem Anpressdruck an der Dichtung anliegt.

Wie erwähnt ist das Steckprofil, also besagte Nut, am unteren Randbereich der Montageöffnung am Bremssattel vorgesehen. Demzufolge ist die Verschraubung am oberen Randbereich angeordnet, bis hin zu einer gedachten Längsachse der Verschlussplatte bzw. der Montage- und Funktionsöffnung.

Bei einer Montage der Verschlussplatte ist diese zunächst lediglich von oben her durch eine Montageöffnung des Bremssattels in die Nut einzuschieben, woraufhin anschließend die Verschraubung erfolgt. Die Dichtung, üblicherweise eine Dichtschnur, ist zuvor am Verschlussdeckel angebracht.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

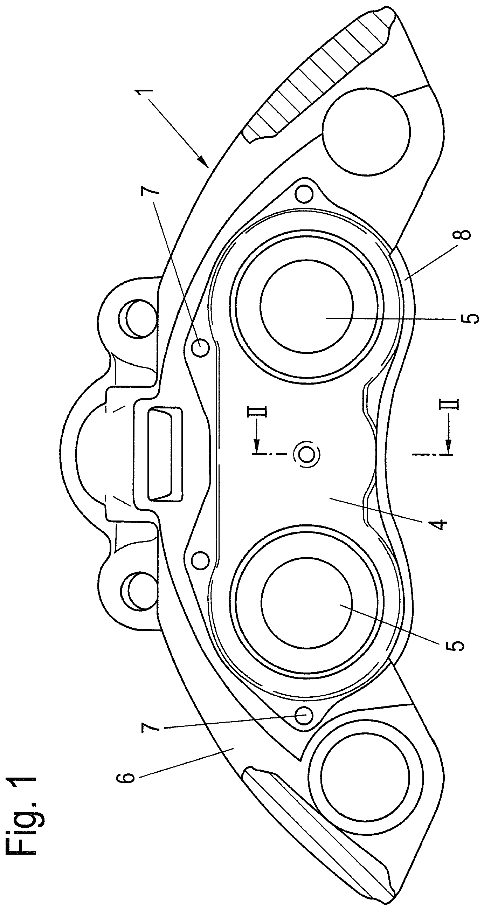

- Figur 1: einen Teilausschnitt einer erfindungsgemäßen Scheibenbremse in einer geschnittenen Vorderansicht

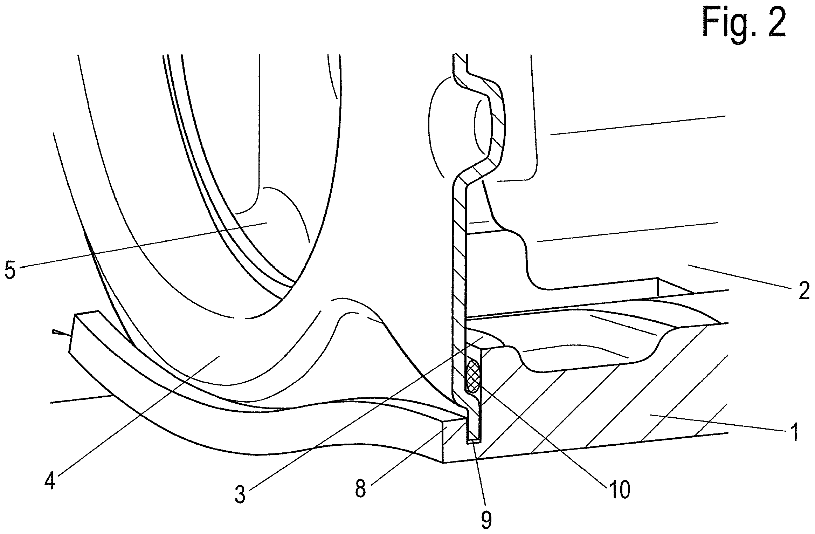

- Figur 2: einen Querschnitt gemäß der Linie II-II in Figur 1 in einer perspektivischen Ansicht.

In den Figuren ist ein Bremssattel 1 einer Scheibenbremse für ein Nutzfahrzeug gezeigt, der einen Aufnahmeraum 2 für nicht dargestellte Funktionsteile wie Stellspindeln einer Zuspanneinrichtung oder dergleichen aufweist, mit einer Montage- und Funktionsöffnung 3, die durch eine Verschlussplatte 4 verschlossen ist. Diese Verschlussplatte 4 weist Durchtrittsöffnungen 5 für die Stellspindeln der Zuspanneinrichtung auf.

Die Verschlussplatte 4 ist zerstörungsfrei lösbar am Bremssattel 1 befestigt, wozu sie in einem ersten Teilbereich mit Schrauben 7 mit dem Bremssattel 1 verschraubt ist und in einem zweiten Teilbereich formschlüssig am Bremssattel 1 gehalten ist.

Hierzu weist der Bremssattel 1 im unteren, einer Montageöffnung 6 abgewandten und der Montage- und Funktionsöffnung 3 zugeordneten Randbereich eine Nut 9 auf, die außenseitig von einem Steg 8 begrenzt ist und in der ein zum Aufnahmeraum 2 hin gekröpfter Rand der Verschlussplatte 4 einliegt.

Zwischen der Verschlussplatte 4 im Übrigen und dem Bremssattel 1 ist eine Dichtung 10, üblicherweise in Form einer Dichtschnur, vorgesehen, mit der der Aufnahmeraum 2 bzw. die Montage- und Funktionsöffnung 3 hermetisch abgedichtet ist.

Die Schrauben 7 sind in an sich bekannter Weise gleichmäßig verteilt und zwar an der dem Steg 8 gegenüberliegenden oberen Randseite der Verschlussplatte 4 bis hin zur beidseitig äußersten Erstreckung.

## Patentansprüche

1. Scheibenbremse für ein Nutzfahrzeug, mit einem einen Aufnahmeraum (2) für Funktionsteile aufweisenden Bremssattel (1), wobei eine Montage- und Funktionsöffnung (3) des Aufnahmeraums (2) durch eine von mindestens einer Stellspindel durchtretenen Verschlussplatte (4) verschlossen ist, die zerstörungsfrei lösbar am Bremssattel (1) befestigt ist, **dadurch gekennzeichnet, dass** die Verschlussplatte (4) in einem ersten Teilbereich mit dem Bremssattel (1) verschraubt und in einem zweiten Teilbereich formschlüssig am Bremssattel (1) gehalten ist.

2. Scheibenbremse nach Anspruch 1, **dadurch gekennzeichnet, dass** zum Formschluss der Bremssattel (1) eine Nut (9) aufweist, die außenseitig durch einen in Längsrichtung der Verschlussplatte (4) sich erstreckenden Steg (8) begrenzt ist und in der ein Randbereich der Verschlussplatte (4) anliegt.

3. Scheibenbremse nach Anspruch 2, **dadurch gekennzeichnet, dass** die Nut (9) auf der einer Montageöffnung (6) des Bremssattels (1) abgewandten Unterseite angeordnet ist.

4. Scheibenbremse nach einem der Ansprüche 2 oder 3, **dadurch gekennzeichnet, dass** die Nut (9) an dem die Montage- und Funktionsöffnung (3) zugeordneten Randbereich des Bremssattels (1) vorgesehen ist.

5. Scheibenbremse nach einem der Ansprüche 2 bis 4, **dadurch gekennzeichnet, dass** die Verschlussplatte (4) mit einem zum Aufnahmeraum (2) hin gekröpften Randbereich in der Nut (9) einliegt.

6. Scheibenbremse nach einem der Ansprüche 2 bis 5, **dadurch gekennzeichnet, dass** die Verschlussplatte (4) weitgehend spielfrei in der Nut (9) einliegt.

7. Scheibenbremse nach einem der Ansprüche 5 oder 6, **dadurch gekennzeichnet, dass** in dem durch die Kröpfung begrenzten Bereich eine umlaufende Dichtung (10) vorgesehen ist, die zwischen der Verschlussplatte (4) und dem Bremssattel (1) angeordnet ist.

8. Scheibenbremse nach einem der vorhergehenden Ansprüche, **dadurch gekennzeichnet, dass** die Verschraubung in dem der Montageöffnung (6) des Bremssattels (1) zugewandten oberen Bereich vorgesehen ist, wobei zwei gegenüberliegende Schrauben (7) am äußersten Randbereich der Längserstreckung der Verschlussplatte (4) positioniert sind.

## Claims

1. A disc brake for a utility vehicle comprising a brake calliper (1) which has a receiving space (2) for functional parts, a mounting and operating opening (3) of the receiving space (2) being closed by a closure plate (4) through which passes at least one adjusting spindle and which is fastened to the brake calliper (1) such that it can be released without destruction, **characterised in that** a first part region of the closure plate (4) is screwed to the brake calliper (1) and a second part region of the closure plate (4) is held onto the brake calliper (1) in a form fit.

2. A disc brake according to claim 1, **characterised in that** for the form fit the brake calliper (1) has a groove (9) which is delimited on the outside by a web (8) which extends in the longitudinal direction of the closure plate (4) and in which abuts an edge region of the closure plate (4).

3. A disc brake according to claim 2, **characterised in that** the groove (9) is arranged on the underside facing away from a mounting opening (6) of the brake calliper (1).

4. A disc brake according to one of claims 2 or 3, **characterised in that** the groove (9) is provided on the edge region of the brake calliper (1) assigned to the mounting and operating opening (3).

5. A disc brake according to one of claims 2 to 4, **characterised in that** lying in the groove (9) is an edge region of the closure plate (4) which is bent over towards the receiving space (2).

6. A disc brake according to one of claims 2 to 5, **characterised in that** the closure plate (4) lies in the groove (9) largely without play.

7. A disc brake according to one of claims 5 or 6, **characterised in that** a circumferential seal (10) is provided in the region delimited by the bent-over portion and is arranged between the closure plate (4) and the brake calliper (1).

8. A disc brake according to one of the preceding claims, **characteris d in that** the screw connection is provided in the upper region facing the mounting opening (6) of the brake calliper (1), two screws (7) being positioned opposite one another on the outermost edge region of the longitudinal extent of the closure plate (4).

## Revendications

1. Frein à disque pour un véhicule utilitaire, comprenant un étrier (1) de frein, ayant un espace (2) de réception de parties fonctionnelles, dans lequel une ouverture (3) de montage et fonctionnelle de l'espace (2) de réception est fermée par une plaque (4) de fermeture, traversée par au moins une broche de réglage et fixée de manière amovible sans destruction à l'étrier (1) de frein, **caractérisé en ce que** la plaque (4) de fermeture est vissée à l'étrier (1) de frein dans une première sous-région et est maintenue à complémentarité de forme sur l'étrier (1) de frein dans une deuxième sous-région.

2. Frein à disque suivant la revendication 1, **caractérisé en ce que**, pour la complémentarité de forme, l'étrier (1) de frein a une rainure (9), qui est délimitée du côté extérieur par un rebord (8) s'étendant dans la direction longitudinale de la plaque (4) de fermeture et dans laquelle s'applique une partie de bord de la plaque (4) de fermeture.

3. Frein à disque suivant la revendication 2, **caractérisé en ce que** la rainure (9) est disposée du côté inférieur, éloigné d'une ouverture (6) de montage de l'étrier (1) de frein.

4. Frein à disque suivant l'une des revendications 2 ou 3, **caractérisé en ce que** la rainure (9) est prévue sur la partie de bord, associée à l'ouverture (3) de montage et fonctionnelle, de l'étrier (1) de frein.

5. Frein à disque suivant l'une des revendications 2 à 4, **caractérisé en ce que** la plaque (4) de fermeture entre dans la rainure (9) par une région de bord coudée vers l'espace (2) de réception.

6. Frein à disque suivant l'une des revendications 2 à 5, **caractérisé en ce que** la plaque (4) de fermeture entre, dans une grande mesure, sans jeu dans la rainure (9).

7. Frein à disque suivant l'une des revendications 5 ou 6, **caractérisé en ce que**, dans la région délimitée par le coude, est prévu un joint (10), qui fait le tour et qui est disposé entre la plaque (4) de fermeture et l'étrier (1) de frein.

8. Frein à disque suivant l'une des revendications précédentes, **caractérisé en ce que** le vissage est prévu dans la région supérieure, tournée vers l'ouverture (6) de montage de l'étrier (1) de frein, deux vis (7) opposées étant placées à la région de bord la plus à l'extérieur de l'étendue longitudinale de la plaque (4) de fermeture.
